# EUROPÄISCHE PATENTSCHRIFT

(11) **EP 2 392 496 B1**
(45) Veröffentlichungstag und Bekanntmachung des Hinweises auf die Patenterteilung: **21.11.2012**
(21) Anmeldenummer: 10164570.3
(22) Anmeldetag: 01.06.2010
(51) Int. Cl.: B60R 1/062, B60R 1/072

(54) **Außenrückblickspiegel mit Reibfeder**
External rear view mirror with friction damper
Rétroviseur extérieur doté d'un amortisseur à friction

(43) Veröffentlichungstag der Anmeldung: 07.12.2011
(73) Patentinhaber: SMR Patents S.à.r.l., 1653 Luxembourg (LU)
(72) Erfinder: Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- WO-A1-99/00272
- DE-A1- 19 812 734

## Beschreibung

Die Erfindung betrifft einen Außenrückblickspiegel mit einem verstellbaren Spiegelglass, der mindestens eine Reibfeder aufweist. DE-A-198 12 734 offenbart einen Rückblickspiegel nach dem Oberbegriff von Anspruch 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Dabei können Lagermittel zwischen Spiegelfuß und Grundträger vorgesehen sein, um Verschleiß und auftretende Reibungskräfte während des Verschwenkens möglichst gering zu halten.

Der Grundträger ist vorzugsweise ebenfalls als Druckgussteil aus einem den auftretenden Kräften und Momenten widerstehenden Werkstoff hergestellt, beispielsweise aus demselben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Beispielsweise kann das Spiegelglas mittels einer Klebeverbindung auf der Trägerplatte montiert sein. Die Trägerplatte kann an der Verstellanordnung und/oder an der Grundplatte geführt und/oder gelagert sein.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann zudem eine Wiederholblinkleuchte, ein Modul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel Sensoren zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen oder z.B. elektrochromatisch abzublenden.

Um beispielsweise unerwünschte Bewegungen des Spiegelglases zu verhindern oder zumindest zu unterdrücken, wie etwa unerwünschtes Flattern während der Fahrt des Kraftfahrzeugs, ist bekannt, eine zwischen der das Spiegelglas tragenden Trägerplatte und dem Grundträger wirkende, beispielsweise über die Verstelleinrichtung hinweg, durch diese hindurch oder an dieser vorbei reichende Halteeinrichtung vorzusehen. Die Halteeinrichtung klemmt die Trägerplatte mitsamt dem darauf angeordneten Spiegelglas in einer gewünschten, vom Fahrer des Kraftfahrzeugs individuell einstellbaren Verstelllage gegenüber dem Grundträger, ohne die Verstellbarkeit von Trägerplatte mitsamt dem darauf angeordneten Spiegelglas gegenüber dem Grundträger grundsätzlich einzuschränken. Die Halteeinrichtung kann beispielsweise als ein Reiblager ausgeführt sein. Ein solches Reiblager besteht aus zumindest paarweise relativ zueinander beweglichen, miteinander zur Anlage kommenden Führungsflächen. Je Paar Führungsflächen ist dabei eine erste Führungsfläche an einem ersten Bauteil der in jeder Verstelllage relativ zueinander zu klemmenden Bauteile angeordnet, und eine mit der ersten Führungsfläche zur Anlage kommende zweite Führungsfläche an dem anderen Bauteil. Die Klemmung erfolgt durch Reibungskräfte zwischen den wenigstens zwei miteinander zur Anlage kommenden Führungsflächen.

Durch WO 99/00272 ist ein Außenrückblickspiegel bekannt, bei dem zur Verhinderung unerwünschter Bewegungen des Spiegelglases ein zwischen Grundträger und einer das Spiegelglas tragenden Trägerplatte ein Reiblager angeordnet ist. Dabei sind eine erste Führungsfläche des Reiblagers der Trägerplatte und eine mit der ersten Führungsfläche zur Anlage kommende zweite Führungsfläche dem Grundträger zugeordnet. Die erste Führungsfläche ist durch eine erhabene Partie, beispielsweise eine Verstärkungsrippe, an einer an der Trägerplatte ausgebildeten, in Richtung des Grundträgers abstehenden, gekrümmten Nase gebildet. Die zweite Führungsfläche ist von der erhabenen Partie der gekrümmten Nase und von einer Lagerstelle aus gesehen, um die das Spiegelglas zu dessen Verstellbarkeit verschwenkbar ist, konkav ausgeführt und an einem an dem Grundträger in Richtung der Trägerplatte abstehenden Armfortsatz gebildet.

Ein allgemein bekanntes und bisweilen ungelöstes Problem derartiger Außenrückblickspiegel ist eine erschwerte Montage der zwischen der das Spiegelglas tragenden Trägerplatte und dem Grundträger wirkenden Halteeinrichtung verbunden mit einer hohen Toleranz der Klemmung zwischen Trägerplatte und Grundträger.

Eine Aufgabe der Erfindung ist es einen einfach zu montierende Außenrückblickspiegel mit einer geringeren Toleranz der Klemmung zwischen der das Spiegelglas tragenden Trägerplatte und dem Grundträger zur Verfügung zu stellen.

Die Aufgabe wird durch die Merkmale gelöst, dass die Führung für die Reibfedern auf einen spezifische Weise ausgebildet ist.

Demnach ist ein Außenrückblickspiegel mit einem Grundträger und einer darauf verstellbar angeordneten, ein Spiegelglas tragenden Trägerplatte vorgesehen, bei dem zum Halten des Spiegelglases in einer eingestellten Position unter Verhinderung unerwünschter Bewegungen zwischen Trägerplatte und Grundträger mindestens ein Reiblager angeordnet ist. Das mindestens eine Reiblager umfasst wenigstens eine an der Trägerplatte in Richtung des Grundträgers abstehende, vorzugsweise federelastische und besonders bevorzugt biegesteife Reibfeder. Die Reibfeder kann einstückig mit der Trägerplatte hergestellt sein, beispielsweise durch Spritzgießen aus demselben Werkstoff wie die Trägerplatte, oder beispielsweise durch Zwei- oder Mehrkomponentenspritzgießen oder durch Umspritzen beispielsweise einer Reibfeder aus einem anderen Werkstoff als die Trägerplatte mit dem Werkstoff der Trägerplatte. Ebenfalls ist denkbar, dass Reibfeder und Trägerplatte als getrennte Bauteile hergestellt sind und nachträglich stoff- oder formschlüssig oder form- und reibschlüssig miteinander verbunden werden. Im Falle einer zumindest eine formschlüssige Verbindung umfassenden Befestigung der Reibfeder an der Trägerplatte kann die Reibfeder beispielsweise aus einem metallischen Werkstoff hergestellt sein.

Die Reibfeder weist mindestens eine erste Führungsfläche auf, welche zum Zwecke einer Klemmung zwischen der das Spiegelglas tragenden Trägerplatte und dem Grundträger mit mindestens einer zweiten, dem Grundträger zugeordneten Führungsfläche zur Anlage kommt.

Mindestens eine zweite Führungsfläche befindet sich in wenigstens einer im Grundträger untergebrachten, der mindestens einen Reibfeder zugeordneten Aufnahme. Die Aufnahme hat eine Aufnahmeöffnung für die Reibfeder. Die Aufnahmeöffnung ist durch zumindest eine Wandung begrenzt, die wenigstens eine zweite Führungsfläche des Reiblagers bildet.

Die Aufnahme weist bevorzugt eine sich zur Mitte der Aufnahmeöffnung verjüngende Struktur mit konvergent-divergentem Querschnittsverlauf der Aufnahmeöffnung auf. Wegen der verjüngenden Struktur mit konvergent-divergentem Querschnittsverlauf haben wenigstens zwei gegenüberliegende, die Aufnahmeöffnung begrenzende Wandungen eine einander zugewandte konvexe Form. Zumindest eine Partie dieser Wandungen bildet zumindest eine zweite Führungsfläche. Dabei können auch Partien beider gegenüberliegender Wandungen gemeinsam wenigstens eine zweite Führungsfläche bilden. Es kann sowohl eine Partie jeder Wandung für sich, als auch Partien aller Wandungen gemeinsam die zumindest eine zweite Führungsfläche bilden.

Bilden beispielsweise Partien beider gegenüberliegender, einander konvex zugewandter Wandungen gemeinsam mindestens eine zweite Führungsfläche, so können in diesem Fall wenigstens zwei erste Führungsflächen an einander abgewandten Oberflächen der Reibfeder vorgesehen sein. Dadurch kann die Reibfeder mit beiden Oberflächen im vorzugsweise gleichzeitigen Kontakt mit den beiden gegenüberliegenden Wandungen stehen.

Einerseits ist durch die gegenüberliegenden Wandungen ein ständiger, gleichmäßiger Kontakt der Reibfeder mit wenigstens einer der Wandungen sichergestellt, wodurch im Vergleich zum Stand der Technik, bei dem die Reibfeder nur einseitig an nur einer korrespondierenden, gegenüberliegenden Führungsfläche mit bis zur Berührungsfreiheit variabler Anpresskraft anliegt, eine Mindestklemmung sichergestellt wird, bzw. welcher gleichmäßige Kontakt die Klemmung nach unten hin begrenzt, und andererseits wird durch die konvexe Form der Wandungen ein Linienkontakt zwischen Reibfeder und Wandungen sichergestellt, wodurch eine Höchstklemmung sichergestellt wird bzw. welcher Linienkontakt im Vergleich zu einem beim Stand der Technik bestehenden Flächenkontakt die Klemmung nach oben hin begrenzt.

Vorteile der Erfindung gegenüber dem Stand der Technik ergeben sich unter anderem dadurch, dass eine geringe Toleranz der die Klemmung erzeugenden Reibungskräfte zwischen den ersten und zweiten Führungsflächen des Reiblagers sichergestellt wird, und andererseits durch den einfachen Aufbau und die einfache Konstruktion des Reiblagers eine einfache Herstellbarkeit und Montage verbunden mit geringen Kosten bei der Serienfertigung von Außenrückblickspiegeln sichergestellt werden kann.

Weitere Vorteile gegenüber dem Stand der Technik ergeben sich beispielsweise dadurch, dass die Montage des aus Reibfeder und Aufnahme bestehenden Reiblagers durch den konvergent-divergenten Querschnittsverlauf der Aufnahmeöffnung, in welche die Reibfeder eingeschoben wird, beispielsweise durch die selbstzentrierende Wirkung der sich zur Mitte der Aufnahmeöffnung hin verjüngenden Struktur wesentlich vereinfacht ist.

Die Reibfeder kann auf unterschiedliche Art und Weise an der Trägerplatte angeordnet sein. So kann eine beispielsweise aus einem metallischen Werkstoff hergestellte Reibfeder beispielsweise vom Werkstoff der Trägerplatte umspritzt sein. Ebenfalls denkbar ist eine einstückige Ausgestaltung von Trägerplatte und Reibfeder. Hierzu kann die Reibfeder integraler Bestandteil der Trägerplatte sein. Die Herstellung einer einstückig mit einer Reibfeder versehenen Trägerplatte kann im Spritzgussverfahren erfolgen. Trägerplatte und Reibfeder können jedoch auch zwei- oder mehrstückig ausgeführt sein. Beispielsweise kann eine Einschubbefestigung der Reibfeder in der Trägerplatte vorgesehen sein. Hierzu kann ein eine Basis bildender Teil der Reibfeder, beispielsweise ein abgewinkelter Teil, in einer in der Trägerplatte vorgesehenen Einschubtasche aufgenommen sein. Die Basis kann in die Einschubtasche in einer Einschubrichtung eingeschoben sein, welche Einschubrichtung bevorzugt quer, z.B. senkrecht, zur Bewegungsrichtung der Reibfeder in der Aufnahme sowie quer, z.B. senkrecht zur durch die Trägerplatte bzw. das Spiegelglas gebildete Ebene verläuft. Wichtig ist hervorzuheben, dass die genannten Anordnungsmöglichkeiten der Reibfeder an die Trägerplatte nicht auf eine Reibfeder beschränkt sind, sondern auch bei mehreren an der Trägerplatte angeordneten Reibfedern vorgesehen sein können.

Die Reibfeder hat einen gekrümmten Verlauf.

Ein an der jüngsten Stelle zwischen den gegenüberliegenden, die Aufnahmeöffnung begrenzenden, vorzugsweise konvexen Wandungen verbleibender Spalt hat bevorzugt einen geraden Verlauf. In den Spalt wird bei der Montage die Reibfeder zwischen die Wandungen eingeschoben. Der gerade Verlauf ist kostengünstig herstellbar und genügt den zur Verstellung des Spiegelglases erforderlichen Freiheitsgraden eines Verschwenkens um zwei parallel zum Spiegelglas verlaufende Achsen. Beim Verschwenken um eine parallel zum Spiegelglas verlaufende Achse verändert sich entweder die Eintauchtiefe der Reibfeder in der Aufnahmeöffnung und/oder der Eintauchwinkel der Reibfeder in die Aufnahmeöffnung. Die Eintauchstelle hingegen verändert sich nicht oder zumindest nicht maßgeblich, wie dies bei einem Verschwenken um eine normal zum Spiegelglas verlaufende Achse der Fall wäre. Dadurch kann ohne Einschränkung der Verstellbarkeit durch Verschwenken um zwei parallel zum Spiegelglas verlaufende Achsen der Spalt einen geraden Verlauf aufweisen.

Die die Länge des Spalts begrenzenden Wandungen der Aufnahmeöffnung können eben und frei von einer Wölbung ausgeführt sein, im Gegensatz zu den die Weite des Spalts begrenzenden, konvexen Wandungen gemäß der zuvor beschriebenen bevorzugten Ausgestaltung. Eine ebene Ausführung der die Länge des Spalts begrenzenden Wandungen beeinträchtigt weder die Montage noch die Funktion nachteilig.

Zur weiteren Vereinfachung der Montage können die beispielsweise ebenen, die Länge des Spalts begrenzenden Wandungen der Aufnahmeöffnung so angeordnet sein, dass sich vom Spiegelglas aus betrachtet eine konvergente Verkürzung der Länge des Spalts mit zunehmender Tiefe der Aufnahmeöffnung ergibt. Hierdurch bilden diese die Länge des Spalts begrenzenden Wandungen eine Selbstzentrierung für die Reibfeder bei der Montage.

Gemäß einer vorteilhaften Ausgestaltung der Erfindung sind die Aufnahme und der Grundträger einstückig. Der Grundträger mit integraler Aufnahme kann beispielsweise im Spritzgießverfahren hergestellt werden. Besonders vorteilhaft ist, wenn ein Zwei-Komponenten-Spritzgussverfahren zur Anwendung kommt, wodurch Aufnahme und Grundträger einstückig, aber aus unterschiedlichen Werkstoffen hergestellt werden können.

Gemäß einer anderen bevorzugten Ausgestaltung der Erfindung ist die Aufnahme als ein vom Grundträger separates Teil hergestellt. Indem die Aufnahme als ein vom Grundträger separates, beispielsweise als Spritzgussteil hergestelltes Bauteil ausgeführt wird, können die Herstellungskosten weiter verringert werden. Unter anderem wird eine Verringerung der Herstellungskosten ermöglicht, indem die die Toleranz der Klemmung maßgeblich beeinflussende Genauigkeit der Form der Aufnahme nicht am wesentlich größeren und damit schwieriger mit kleinstmöglicher Toleranz zu fertigenden Grundträger hergestellt werden muss.

Um die Montage zu vereinfachen, kann vorgesehen sein, die Aufnahme in den Grundträger einzuklipsen. Hierzu ist zwischen Grundträger und Aufnahme eine Klipsverbindung vorgesehen.

Besonders bevorzugt ist die Aufnahme aus einem elastomeren Werkstoff hergestellt bzw. umfasst das Material der Aufnahme einen elastomeren Werkstoff.

Es können je Verstellrichtung des Spiegelglases, eine Reibfeder und eine dieser zugeordneten Aufnahme vorgesehen sein.

Grundsätzlich kann das Reiblager auch umgekehrt aufgebaut sein, wobei die Reibfeder am Grundträger und die der Reibfeder zugeordnete Aufnahme an der das Spiegelglas tragenden Trägerplatte angeordnet ist.

Wichtig ist hervorzuheben, dass die jeweils beschriebenen Ausgestaltungsmöglichkeiten sich nicht nur auf ein Reiblager bestehend aus einer Reibfeder und einer Aufnahme beziehen, sondern auch mehrere Reibfedern und Aufnahmen umfassen können, die alle identisch, oder aber auch unterschiedlich beispielsweise gemäß unterschiedlicher oben beschriebener Ausgestaltungsmöglichkeiten ausgeführt sein können.

Weitere Merkmale der Erfindung ergeben sich aus den weiteren Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: ein zwischen Grundträger und Trägerplatte eines Außenrückblickspiegels wirkendes Reiblager in perspektivischer Ansicht.
- Fig. 2: das Reiblager aus Fig. 1 vom Grundträger aus gesehen in perspektivischer Ansicht.
- Fig. 3: eine am Grundträger angeordnete Aufnahme des Reiblagers aus Fig. 1 in einer Frontalansicht von der Trägerplatte aus gesehen.
- Fig. 4: die Aufnahme aus Fig. 3 in perspektivischer Ansicht.

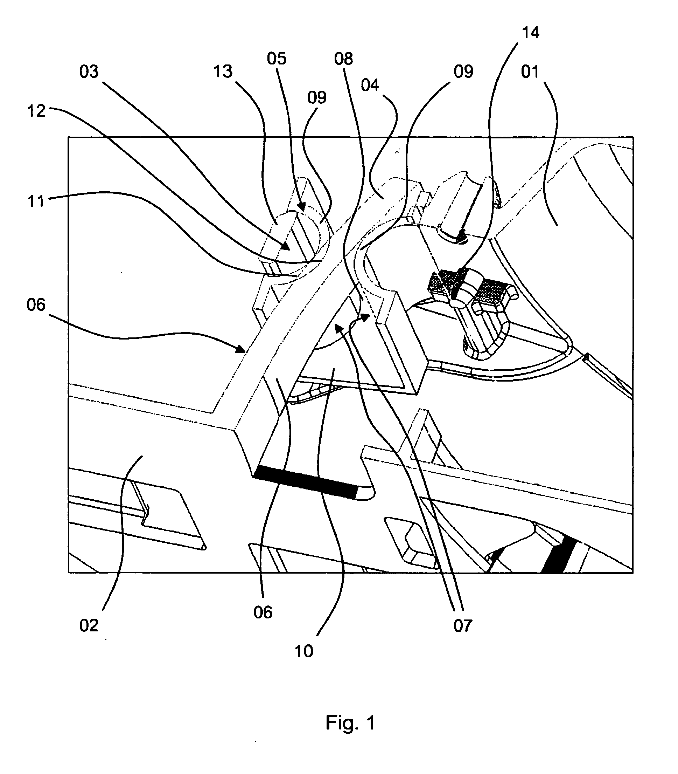

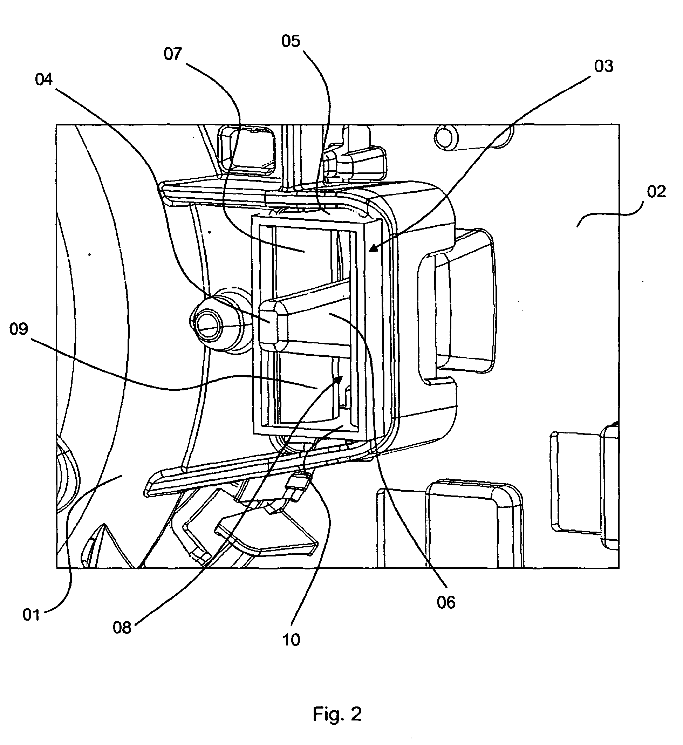

Ein Außenrückblickspiegel für ein Kraftfahrzeug umfasst beispielsweise ein Außenrückblickspiegelgehäuse, welches zumindest einen einem an einem Kraftfahrzeug angeordneten Spiegelfuß zugeordneten Grundträger 01 beherbergt. Eine ein Spiegelglas tragenden Trägerplatte 02 ist gegenüber dem Grundträger 01 verstellbar angeordnet. Zwischen Trägerplatte 02 und Grundträger 01 ist wenigstens ein in den Fig. 1 bis 4 ganz oder in Teilen dargestelltes Reiblager 03 vorgesehen, um unerwünschte Bewegungen des Spiegelglases während der Fahrt des Kraftfahrzeugs zu verhindern.

Das Reiblager 03 weist eine an der Trägerplatte 02 angeordnete, in Richtung des Grundträgers 01 von der Trägerplatte 02 abstehende Reibfeder 04 auf, sowie eine am bzw. im Grundträger 01 vorgesehene, der Reibfeder 04 zugeordnete Aufnahme 05. Vorzugsweise an zwei an einander abgewandten Oberflächen der Reibfeder 04 ist jeweils wenigstens eine erste Führungsfläche 06 vorgesehen. Die Aufnahme 05 weist wenigstens eine mit einer der ersten Führungsflächen 06 zur Anlage kommende zweite Führungsfläche 07 auf.

Das Reiblager 03 klemmt die Trägerplatte 02 mitsamt dem darauf angeordneten Spiegelglas in einer gewünschten, vom Fahrer des Kraftfahrzeugs individuell einstellbaren Verstelllage gegenüber dem Grundträger 01, ohne die Verstellbarkeit der Trägerplatte 02 mitsamt dem darauf angeordneten Spiegelglas gegenüber dem Grundträger 01 grundsätzlich einzuschränken. Durch das zur Anlage kommen bzw. durch das Aneinanderanliegen der ersten und zweiten Führungsflächen 06, 07 kommt es zu Reibung zwischen den Führungsflächen 06, 07. Die daraus resultierende Reibungskraft dient der Klemmung der das Spiegelglas tragenden Trägerplatte 02 gegenüber dem Grundträger 01 in einer beliebigen eingestellten Verstelllage des Spiegelglases. Die Klemmung verhindert unerwünschte Bewegungen des Spiegelglases gegenüber dem Grundträger 01.

Die Aufnahme 05 hat eine Aufnahmeöffnung 08, in welche die Reibfeder 03 eingeschoben ist. Die Aufnahmeöffnung 08 ist in ihrer Weite durch gegenüberliegende Wandungen 09 begrenzt und in ihrer Länge durch Wandungen 10. Zumindest Partien der gegenüberliegenden Wandungen 09 bilden die wenigstens eine zweite Führungsfläche 07 des Reiblagers 03. Die Reibfeder 04 kann gegen die Reibungskraft in der Aufnahmeöffnung 08 verschoben werden.

Die Aufnahme 05 hat bevorzugt eine sich zur Mitte der Aufnahmeöffnung 08 verjüngende Struktur mit konvergent-divergentem Querschnittsverlauf der Aufnahmeöffnung 08. Die zwei gegenüberliegenden, die Weite der Aufnahmeöffnung 08 begrenzenden Wandungen 09 haben vorzugsweise eine einander zugewandte konvexe Form. An der jüngsten Stelle der Aufnahmeöffnung 08 verbleibt ein Spalt zwischen den gegenüberliegenden, konvexen Wandungen 09.

Der die Aufnahmeöffnung 08 bildende verbleibende Spalt zwischen den gegenüberliegenden, die Weite der Aufnahmeöffnung 08 begrenzenden konvexen Wandungen 09 hat vorzugsweise einen geraden Verlauf. In den Spalt ist die Reibfeder 04 zwischen die Wandungen 09 eingeschoben.

Die die Länge des Spalts begrenzenden Wandungen 10 der Aufnahmeöffnung 08 können wie in den Fig. 1, 2, 3 und 4 dargestellt eben und frei von einer Wölbung ausgeführt sein.

Die Reibfeder 04 weist einen gekrümmten Verlauf auf und ist vorzugsweise federelastisch und besonders bevorzugt biegesteif ausgeführt. Der damit erzielbare Effekt kann in Fig. 1 erkannt werden. Dort verdeutlicht die Kurve 11 den gekrümmten Verlauf einer Reibfeder 04 in unbelastetem Zustand und die Kurve 12 die einseitige Kontur des durch die konvexen Wandungen 09 gegebenen Querschnittsverlauf der Aufnahmeöffnung 08. Durch eine biegesteife, federelastische Ausführung der Reibfeder 03 kann die in der Aufnahmeöffnung 08 aufgenommene Reibfeder 03 elastisch verformt werden, so dass wenigstens eine erste Führungsfläche 06 der Reibfeder 03 mit wenigstens einer der die Aufnahmeöffnung 08 der Aufnahme 05 begrenzenden Wandungen 09 in Kontakt steht.

Durch die konvexen Wandungen 09 und den konvergent-divergenten Querschnittsverlauf steht die Reibfeder 04 in stetigem Linienkontakt mit wenigstens einer der Wandungen 09. Mit anderen Worten bildet zumindest eine Partie der beiden gegenüberliegenden Wandungen 09 mit einander zugewandt konvexer Form wenigstens eine mit wenigstens einer ersten Führungsfläche 06 der Reibfeder 04 in Kontakt stehende zweite Führungsfläche 07.

Die Reibfeder 04 des in Fig. 1 dargestellten Reiblagers 03 ist beispielsweise durch Spritzgießen einstückig mit der Trägerplatte 02 verbunden. Die Reibfeder 04 kann beispielsweise einen Kern aus einem beliebigen Werkstoff aufweisen, der beispielsweise in einer Spritzgussform während des Spritzgießens gehalten wird, und anschließend mit dem Werkstoff der Trägerplatte 02 umspritzt sein. Die Reibfeder 04 kann auch als integraler Bestandteil der Trägerplatte 02 ausgeführt sein und vollständig aus dem selben Werkstoff wie die Trägerplatte 02 bestehen.

Ebenfalls ist denkbar, die Reibfeder 04 im Zwei- oder Mehrkomponentenspritzguss aus einem anderen Werkstoff, als dem der Trägerplatte 02 anzuspritzen.

Reibfeder 04 und Trägerplatte 02 können als getrennte Bauteile hergestellt sein und nachträglich stoff- oder formschlüssig oder form- und reibschlüssig miteinander verbunden sein. Beispielsweise kann eine Einschubbefestigung der Reibfeder 04 in der Trägerplatte 02 vorgesehen sein, indem ein eine Basis bildender Teil der Reibfeder 04 in einer in der Trägerplatte 02 vorgesehenen Einschubtasche aufgenommen ist. Die Einschubrichtung der Basis in die Einschubtasche ist bevorzugt quer, gegebenenfalls senkrecht, zur Bewegungsrichtung der Reibfeder 04 in der Aufnahme 05. Die Bewegungsrichtung verläuft dabei senkrecht zur durch die Trägerplatte 02 bzw. das beispielsweise mittels einer Klebeverbindung auf der Trägerplatte 02 befestigte Spiegelglas gebildeten Ebene.

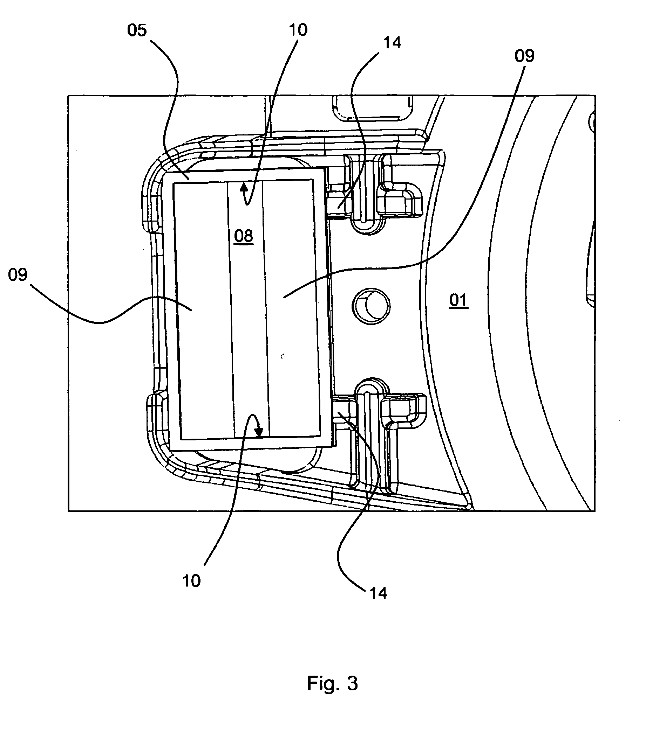

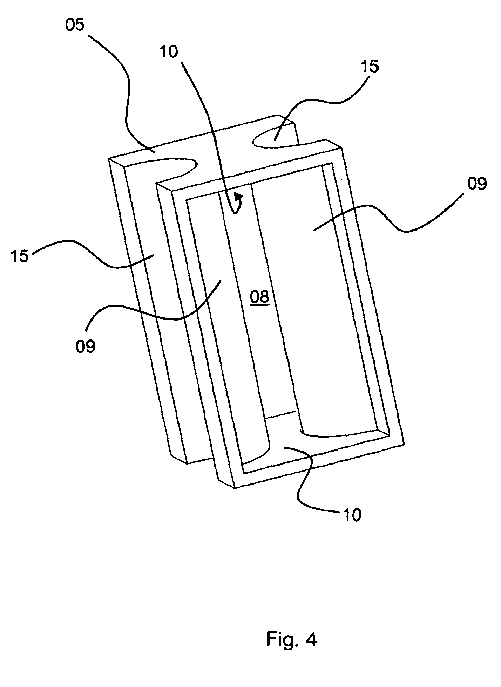

Aufnahme 05 und Grundträger 01 können wie aus Fig. 3 und 4 ersichtlich als separate Teile hergestellt sein. Zwischen Aufnahme 05 und Grundträger 01 kann eine Klipsverbindung zur einfachen Montage der Aufnahme 05 am Grundträger vorgesehen sein. Die Klipsverbindung kann durch einen am Grundträger 01 vorgesehenen Steg 13 sowie Vorsprünge 14 ausgebildet sein, welche mit den konkaven Außenseiten 15 der Wandungen 09 der Aufnahme 05 korrespondieren. Die Führung bzw. Halterung der Aufnahme 05 in den verbleibenden Richtungen kann durch eine beispielsweise als Passung ausgeführte Einschuböffnung im Grundträger 01 sichergestellt werden.

Selbstverständlich ist auch denkbar, dass Aufnahme 05 und Grundträger 01 einstückig hergestellt sind. Die einstückige Herstellung kann ähnlich der bereit beschriebenen Herstellungsmöglichkeiten für die Reibfeder im Spritzgussverfahren, beispielsweise aus einem homogenen Werkstoff, oder z.B. im Zwei- oder Mehrkomponentenspritzguss aus unterschiedlichen Werkstoffen erfolgen.

Wichtig ist hervorzuheben, dass die Erfindung nicht durch einen Außenrückblickspiegel erschöpft ist, sondern durchaus sowohl Außenrückblickspiegelanordnungen für Fahrzeuge, insbesondere Kraftfahrzeuge, mit einem zuvor oder in den Ansprüchen beschriebenen Außenrückblickspiegel, als auch Reiblager für Außenrückblickspiegel von Fahrzeugen umfasst.

Demnach betrifft die Erfindung auch eine als Reiblager ausgeführte Halteeinrichtung zur Verhinderung unerwünschter Bewegungen zwischen einer ein Spiegelglas eines Außenrückblickspiegels tragenden Trägerplatte und einem Grundträger des Außenrückblickspiegels.

Die Erfindung ist insbesondere im Bereich der Herstellung von Außenrückblickspiegeln und Außenrückblickspiegelanordnungen für Kraftfahrzeuge gewerblich anwendbar.

### Bezugszeichenliste

- 01: Grundträger
- 02: Trägerplatte
- 03: Reiblager
- 04: Reibfeder
- 05: Aufnahme
- 06: erste Führungsfläche
- 07: zweite Führungsfläche
- 08: Aufnahmeöffnung
- 09: Wandung
- 10: Wandung
- 11: Kurve
- 12: Kurve
- 13: Steg
- 14: Vorsprung
- 15: Außenseite

## Patentansprüche

1. Außenrückblickspiegel mit wenigstens einem Grundträger (01) und einer verstellbar gegenüber diesem angeordneten, ein Spiegelglas tragenden Trägerplatte (02), wobei zwischen Trägerplatte (02) und Grundträger (01) wenigstens ein Reiblager (03) vorgesehen ist, welches mindestens eine an der Trägerplatte (02) angeordnete, in Richtung des Grundträgers (01) abstehende Reibfeder (04) mit wenigstens einer ersten Führungsfläche (06) und mindestens eine dem Grundträger (01) zugeordnete zweite Führungsfläche (07) umfasst, wobei die ersten und zweiten Führungsflächen (06, 07) miteinander zur Anlage kommen, wobei
eine, der Reibfeder (04) zugeordnete Aufnahme (05) mit einer Aufnahmeöffnung (08), in welche die Reibfeder (04) eingeschoben ist, am Grundträger (01) angeordnet ist, wobei die Aufnahmeöffnung (08) durch zumindest eine Wandung (09) begrenzt ist, die wenigstens eine zweite Führungsfläche (07) des Reiblagers (03) bildet, **dadurch gekennzeichnet, dass**
die Reibfeder (04) einen gekrümmten Verlauf aufweist.

2. Außenrückblickspiegel nach Anspruch 1,
**dadurch gekennzeichnet,**
**dass** die Aufnahme (05) eine sich zur Mitte der Aufnahmeöffnung (08) verjüngende Struktur mit konvergent-divergentem Querschnittsverlauf aufweiset, wobei wenigstens zwei gegenüberliegende, die Aufnahmeöffnung (08) begrenzende Wandungen (09) eine einander zugewandte konvexe Form aufweisen.

3. Außenrückblickspiegel nach Anspruch 2,
**dadurch gekennzeichnet,**
**dass** zumindest eine Partie der beiden gegenübediegenden Wandungen (09) mit einander zugewandt konvexer Form wenigstens eine zweite Führungsfläche (07) bildet.

4. Außenrückblickspiegel nach Anspruch 3,
**gekennzeichnet durch**
wenigstens zwei an einander abgewandten Oberflächen der Reibfeder (04) vorgesehene erste Führungsflächen (06), welche mit wenigstens einer **durch** Partien unterschiedlicher gegenüberliegender Wandungen (09) mit einander zugewandt konvexer Form gebildete zweite Führungsfläche (07) zur Anlage kommen.

5. Außenrückblickspiegel nach einem der vorhergehenden Ansprüche,
**gekennzeichnet durch**
einen geraden Verlauf eines zwischen gegenüberliegenden, die Weite der Aufnahmeöffnung (08) begrenzenden Wandungen (09) verbleibenden Spalts, in welchen die Reibfeder (04) zwischen die Wandungen (09) eingeschoben ist.

6. Außenrückblickspiegel nach einem der vorhergehenden Ansprüche,
**gekennzeichnet durch**
eben und frei von einer Wölbung ausgeführte, die Länge der Aufnahmeöffnung (08) begrenzende Wandungen (10).

7. Außenrückblickspiegel nach einem der vorhergehenden Ansprüche,
**gekennzeichnet durch**
eine von der das Spiegelglas tragenden Trägerplatte (02) aus betrachtet konvergierende Anordnung von die Länge der Aufnahmeöffnung (08) begrenzenden Wandungen (10) zueinander.

8. Außenrückblickspiegel nach einem der vorhergehenden Ansprüche,
**dadurch gekennzeichnet,**
**dass** Aufnahme (05) und Grundträger (01) einstückig hergestellt sind.

9. Außenrückblickspiegel nach einem der Ansprüche 1 bis 7,
**dadurch gekennzeichnet,**
**dass** Aufnahme (05) und Grundträger (01) als separate Teile hergestellt sind.

## Claims

1. An external rear view mirror with at least one base support (01) and one supporting plate (02) that supports a mirror glass, which supporting plate (02) is adjustably arranged in relation to the base support (01), wherein at least one friction bearing (03) is provided between the supporting plate (02) and the base support (01), which comprises at least one friction spring (04) projecting in the direction of the base support (01) and being arranged on the supporting plate (02) with at least one first guide surface (06) and with at least one second guide surface (07) associated to the base support (01), wherein the first and second guide surfaces (06, 07) come into contact with each other, wherein a retainer (05) associated to the friction spring (04) and having a receiving aperture (08) into which the friction damper (04) is pushed, is arranged on the base support (01), wherein the receiving aperture (08) is delimited by at least a wall (09) that forms at least one second guide surface (07) of the friction bearing (03), **characterized in that**
the friction spring (04) has a curved course.

2. An external rear view mirror according to claim 1,
**characterized in that**
the retainer (05) has a structure with a convergent-divergent cross-section tapering to the center of the receiving aperture (08), wherein at least two opposing walls (09) that delimit the receiving aperture (08) are convex and face each other.

3. An external rear view mirror according to claim 2,
**characterized in that**
at least a part of the two opposing walls (09) that are convex and face each other forms at least one second guide surface (07).

4. An external rear view mirror according to claim 3,
**characterized by**
at least two first guide surfaces (06) that are provided on surfaces of the friction spring (04) that face away from each other, which come into contact with at least one second guide surface (07) that is formed by parts of different opposing walls (09) that are convex and face each other.

5. An external rear view mirror according to any one of the preceding claims,
**characterized by**
a straight course of a gap left between opposing walls (09) that delimit the width of the receiving aperture (08), into which gap the friction spring (04) is pushed between the walls (09).

6. An external rear view mirror according to any one of the preceding claims,
**characterized by**
walls (10) that are level and non-curved and that delimit the length of the receiving aperture (08).

7. An external rear view mirror according to any one of the preceding claims,
**characterized by**
walls (10) that converge toward each other as viewed from the supporting plate (02) that supports the mirror glass, said walls (10) delimiting the length of the receiving aperture (08).

8. An external rear view mirror according to any one of the preceding claims,
**characterized in that**
the retainer (05) and the base support (01) are manufactured in one piece.

9. An external rear view mirror according to any one of claims 1 to 7,
**characterized in that**
the retainer (05) and the base support (01) are manufactured as separate parts.

## Revendications

1. Rétroviseur extérieur comportant au moins un support de base (01) et une plaque de support (02) supportant un miroir agencé de manière ajustable par rapport à celle-ci, un palier à friction (03) étant prévu entre la plaque de support (02) et le support de base (01), ayant au moins un ressort à friction (04) agencé sur la plaque de support (02), faisant saillie en direction du support de base (01), et au moins une première surface de guidage (06) et au moins une seconde surface de guidage (07) associée au support de base (01), de sorte que les première et seconde surfaces viennent en contact l'une avec l'autre, dans lequel un élément récepteur (05) est agencé sur le support de base (01), associé au ressort à friction (04), ayant une ouverture de réception (08) dans laquelle est inséré le ressort à friction (04), l'ouverture de réception (08) étant délimitée par au moins une paroi (09), formant au moins une seconde surface (07) du palier à friction (03).
**caractérisé en ce que**
le ressort à friction (04) présente un profil incurvé.

2. Rétroviseur extérieur selon la revendication 1,
**caractérisé en ce que**
l'élément récepteur (05) comporte une structure ayant un profil en coupe transversale convergent-divergent se rétrécissant vers le centre de l'ouverture de réception (08), de sorte qu'au moins deux parois en vis-à-vis (09), qui délimitent l'ouverture de réception (08), se font face et ont une forme convexe.

3. Rétroviseur extérieur selon la revendication 2,
**caractérisé en ce que**
au moins deux tronçons, appartenant chacun à une des deux parois en vis-à-vis (09), d'une forme convexe et se faisant face, forment une seconde surface de guidage (07).

4. Rétroviseur extérieur selon la revendication 3,
**caractérisé par**
au moins deux premières surfaces de guidage (06) prévues sur des surfaces du ressort à friction (4) dirigées à l'opposé, venant en contact avec au moins une seconde surface de guidage (07) par des parties de parois en vis-à-vis différentes (09), de forme convexe et se faisant face.

5. Rétroviseur extérieur selon l'une quelconque des revendications précédentes,
**caractérisé par**
un profil rectiligne d'un espace situé entre des parois en vis-à-vis (09) délimitant la largeur de l'ouverture de réception (08), dans lequel le ressort à friction (04) est inséré entre les parois (09).

6. Rétroviseur extérieur selon l'une quelconque des revendications précédentes,
**caractérisé par**
des parois en vis-à-vis (10) plates et non incurvées, délimitant la longueur de l'ouverture de réception (08).

7. Rétroviseur extérieur selon l'une quelconque des revendications précédentes,
**caractérisé par**,
une disposition convergente, vu depuis la plaque de support (02) supportant le miroir, des parois en vis-à-vis (10), délimitant la longueur de l'ouverture de réception (08).

8. Rétroviseur extérieur selon l'une quelconque des revendications précédentes,
**caractérisé en ce que**
l'élément récepteur (05) et le support de base (01) sont produits en un seul bloc.

9. Rétroviseur extérieur selon l'une quelconque des revendications 1 à 7,
**caractérisé en ce que**
l'élément récepteur (05) et le support de base (01) sont produits sous la forme de pièces séparées.
